# EUROPEAN PATENT SPECIFICATION

(11) **EP 3 429 380 B1**
(45) Date of publication and mention of the grant of the patent: **13.12.2023**
(21) Application number: 17767176.5
(22) Date of filing: 08.03.2017
(51) Int. Cl.: A24D 3/06, A24B 15/28, A24D 1/18

(54) **MULTI-LAYERED MICRO-BEADS FOR ELECTRONIC CIGARETTES**
MEHRSCHICHTIGE MIKROPERLEN FÜR ELEKTRONISCHE ZIGARETTEN
MICRO-BILLES MULTICOUCHES POUR CIGARETTES ÉLECTRONIQUES

(30) Priority: 15.03.2016 US 201615070692
(43) Date of publication of application: 23.01.2019
(73) Proprietor: RAI Strategic Holdings, Inc., Winston-Salem, NC 27101 (US)
(72) Inventor: SWEDE, Travis M., Winston-Salem, North Carolina 27101 (US); AMMERMAN, Isabel, Mocksville, North Carolina 27028 (US); COOKE, Chelsea, Clemmons, North Carolina 27012 (US); CUNNINGHAM, Candice, Winston-Salem, North Carolina 27103 (US); SONG, Chen, Clemmons, North Carolina 27012 (US); TAYLOR, Anthony, High Point, North Carolina 27260 (US)
(74) Representative: Hoeger, Stellrecht & Partner Patentanwälte mbB
(86) International application number: PCT/US2017/021395
(87) International publication number: WO 2017/160559

(56) References cited:
- WO-A1-2015/092748
- US-A1- 2009 235 941
- US-A1- 2010 170 522
- US-A1- 2011 155 154
- US-A1- 2011 232 657
- US-A1- 2012 024 305
- US-A1- 2014 060 556
- US-A1- 2015 027 469
- US-A1- 2015 335 070

## Description

### CROSS REFERENCE TO RELATED APPLICATIONS

The present application claims the benefit of priority to U.S. Patent Application No. 15/070,692, filed March 15, 2016.

### TECHNICAL FIELD

The present application relates generally to the field of electronic cigarettes.

### BACKGROUND

US 2011/232657 A1 discloses a process of making encapsulated tobacco beads, comprising mixing tobacco particles and menthol in an aqueous solution to form a wet mass, extruding the wet mass to form extrudates, spheronizing the extrudates to form tobacco beads, drying the tobacco beads, contacting the beads with a solution comprising a cation and introducing the contacted tobacco beads into a solution of coating material in a concentration effective to induce ionic gelation of the coating material around the beads, to form encapsulated tobacco beads having gel coatings.

US 2015/335070 A1 discloses an aerosol delivery system, comprising a control body portion including a first elongate tubular member having opposed ends, and a power source disposed therein, and a cartridge portion including a second tubular member having opposed first and second ends, one of the first and second ends being removably engaged with one of the opposed ends of the control body portion, the cartridge body portion further comprising a first aerosol generation arrangement disposed within the second tubular member and configured to operably engage the power source upon engagement between the one of the opposed ends of the control body portion and the one of the first and second ends of the cartridge body portion, the other of the first and second ends of the cartridge body portion being further configured as a mouth-engaging end, the cartridge body portion further including a second aerosol generation arrangement within the second tubular member disposed between the first aerosol generation arrangement and the mouth-engaging end.

Popular electronic cigarettes often include a liquid storage component for storing liquid smoke, a vaporizing chamber with a heating coil attached for the liquid smoke to become vaporized therein, and a battery to power the device. The liquid smoke typically includes a mixture of propylene glycol, glycerin, nicotine, water and flavoring. Various electronic cigarettes have a single device which houses both the heating element and the liquid smoke in one unit, commonly referred to as a cartomizer. See, for example, U.S. Pat. No. 5,060,671 to Counts et al.; U.S. Pat. No. 9,016,274 to White; and U.S. Pat. No. 9,078,474 to Thompson.

In order to draw in the liquid smoke to be vaporized, the liquid in the cartridge is transported to the vaporizing coil via a transport medium, wherein a common medium is a wick. When the user inhales on the electronic cigarette, the liquid is 'pulled' from the reservoir into the vaporizing chamber using gravity and capillary action in the wick. The liquid smoke is either adsorbed or resting on the vaporizer's heating apparatus and heated until it becomes vapor. The vapor is drawn up through the electronic cigarette and out of the mouthpiece. The wick material can include any combination of silica, organic cotton balls, cellucotton rayon fibers, stainless steel, fiberglass, and other materials with similar properties. See, for example, U.S. Pat. No. 8,528,569 to Newton; U.S. Pat. No. 8,539,959 to Scatterday; and U.S. Pat. Pub. No. 2015/0216232 to Bless et al.

Various electronic cigarettes only have one liquid storage component, thereby limiting the user to only one flavor of the liquid smoke. Some electronic cigarette designs are disposable, wherein once the single flavor in the liquid storage component has been exhausted, the entire electronic cigarette is disposed of. Other designs allow for the liquid storage device to be reusable, with the storage device including a mechanism for pouring different liquid smoke flavors and compositions into the liquid storage device. Some designs allow for different liquid storage components to be interchanged, although each storage component suffers from the limitation of only allowing one flavor to be poured and loaded into one liquid storage device. Still other electronic cigarettes include multiple liquid reservoirs in a single electronic device. For example, U.S. Pub. Pat. App. No. 2014/0060556 to Liu discloses an electronic cigarette that has at least two vaporizing chambers that can be loaded with separate liquid smoke and can be manually switched between by the user while using the device.

The use of a crushable or combustible flavor bead either in a traditional or electronic cigarette is also known. For example, U.S. Pub. Pat. App. No. 2015/0027469 to Tucker et al. discloses an electronic cigarette that uses a mechanical means to crush a flavor bead that is placed between the user and the vaporized liquid smoke similar. U.S. Pub. Pat. App. No. 2012/0037172 to Allen et al. discloses the use of a flavor bead in a traditional, combustion based cigarette, wherein the flavor bead consists of tobacco particles, water, and optional flavorants that are placed out throughout the cigarette and break down while the cigarette burns.

However, there are a number of issues with various conventional electronic cigarette designs. For example, user experience often is limited to the specific flavor profile selected with the liquid or crushable flavor beads; for the user to switch to another flavor, the liquid in the compartment or crushable beads must be used up, or, if the design allows for it, the liquid smoke must be replenished. Further, crushable flavor beads typically do not provide a uniform flavor experience and release only one flavor. There is also a size issue, as the addition of each additional liquid compartment, and the mechanisms to allow for manual switching between the number of liquid compartments, will increase the overall size of the device. Currently, there is a tradeoff of having the convenience of multiple flavors to choose from without refilling, with the burden of having a larger electronic cigarette and less room for each flavor in the device.

Additionally, in both the refillable single or multiple liquid compartment arrangement, there is an inherent issue with spillage and leakage of the liquid smoke. Reusable liquid compartments must be refilled with liquid smoke that is poured into the compartment, often being cumbersome due to the location of the intake being around other parts of the electronic cigarette that should not be exposed to the liquid and the spillage of the liquid smoke during refill. Furthermore, reusable and disposable electronic devices are prone to leaking during use and storage, causing damage to other parts in the electronic cigarette. It is therefore desirable to have a system with the ability to provide multiple flavors throughout the smoking experience without the cumbersome requirement of having to refill liquid reservoirs with different flavors.

### SUMMARY

The above and other needs are met by aspects of the present disclosure which, in a first aspect, provides for an electronic smoking article accessory according to claim 1 that comprises a reservoir configured to contain a liquid to be vaporized. A micro-bead compartment includes a region through which an aerosol may flow. The micro-bead compartment includes an upstream end connected to the reservoir and a downstream end spaced from the upstream end. A plurality of flavored micro-beads are positioned within the micro-bead compartment between the upstream end and the downstream end. Each of the plurality of micro-beads comprises a plurality of layers. Each of the plurality of layers comprises a combination of a base aerosol precursor and a flavorant. The combination of the base aerosol precursor and the flavorant creates a distinct flavor for inhalation by a user when interacted with the aerosol flowing through the micro-bead compartment.

According to a second aspect, a method for making a micro-bead for use in creating a distinct flavor for inhalation by a user when interacted with an aerosol. The method comprises creating a first flavor layer formed from a first base aerosol precursor and a first flavorant. The first flavor layer is constructed to have the first flavorant extracted as the aerosol flows over the first flavor layer. The first flavor layer is coated with a second flavor layer formed from a second base aerosol precursor and a second flavorant, and the second flavorant is different than the first flavorant. The second flavor layer is constructed to have the second flavorant in the second flavor layer extracted as the aerosol flows over the second flavor layer.

According to a third aspect, a flavor compartment for use with an electronic smoking article according to claim 6 includes a housing element comprising a ventilated housing upstream end and a ventilated housing downstream end. A first connection terminal is on the ventilated housing upstream end portion and is configured to operably connect to an upstream end of the electronic smoking article. A second connection terminal is on the ventilated housing downstream end portion and is configured to operably connect to a downstream end of the electronic smoking article. The housing element contains a plurality of flavored micro-beads positioned within the compartment between the ventilated housing upstream end and the ventilated housing downstream end. The plurality of micro-beads comprises a plurality of layers, and each of the plurality of layers includes a combination of a base aerosol precursor and a flavorant. Each combination of the base aerosol precursor and the flavorant interacts with an aerosol flowing through the compartment to create a distinct flavor for inhalation by a user.

According to a fourth aspect, a method for adding a plurality of flavors to an aerosol in an electronic smoking article according to claim 10 is provided. The method includes vaporizing a liquid, passing the vaporized liquid into a micro-bead compartment, extracting a first flavorant from a first flavor layer of a plurality of micro-beads in the micro-bead compartment, and mixing the extracted first flavorant and the vaporized liquid into a first aerosol for subsequent inhalation by a user. After exhausting the first flavorant, a second flavorant is extracted from a second flavor layer of the plurality of micro-beads in the micro-bead compartment. The extracted second flavorant and the vaporized liquid is mixed into a second aerosol for subsequent inhalation by a user.

### BRIEF DESCRIPTION OF THE DRAWINGS

The foregoing and other features of the present disclosure will become more fully apparent from the following description and appended claims, taken in conjunction with the accompanying drawings. Understanding that these drawings depict only several implementations in accordance with the disclosure and are therefore, not to be considered limiting of its scope, the disclosure will be described with additional specificity and detail through use of the accompanying drawings. Exemplary embodiments of the present application will now be described, way of example only, with reference to the accompanying drawings, which are not necessarily drawn to scale, and wherein:
FIG. 1 is a perspective view of a fully assembled electronic smoking article with a micro-bead compartment, a liquid reservoir, and a battery.
FIG. 2 is a cross-sectional view of one embodiment for a design of the heating coil being in direct contact with the liquid reservoir, in order to vaporize the liquid which will travel through the micro-bead compartment.
FIG. 3 is a cross-sectional view of one embodiment for a design of the heating coil that uses a transport mechanism to draw the liquid to the coil, in order to vaporize the liquid which will travel through the micro-bead compartment.
FIG. 4A is a cross-sectional view of one embodiment of the micro-beads inside the micro-bead compartment shown in FIG. 1, FIG. 2, and FIG. 3 where the micro-beads are packed between two mesh screens.
FIG. 4B is a cross-sectional front view of one embodiment of the micro-beads inside the micro-bead compartment shown in FIG. 1, FIG. 2, and FIG. 3 where the micro-beads are packed between two mesh screens.
FIG. 5A is a cross-sectional view of one embodiment of the micro-beads inside the micro-bead compartment shown in FIG. 1, FIG. 2, and FIG. 3 where the micro-beads are arranged around a mesh cylinder.
FIG. 5B is a cross-sectional front view of one embodiment of the micro-beads inside the micro-bead compartment shown in FIG. 1, FIG. 2, and FIG. 3 where the micro-beads are arranged around a mesh cylinder.
FIG. 6A is a cross-sectional view of a micro-bead including three flavor layers according to an embodiment.
FIG. 6B shows the outer shell of the micro-bead of Figure 6A.
FIG. 7 is a schematic flow diagram of an example method for manufacturing a single micro-bead.
FIG. 8 is a schematic flow diagram of an example method for using micro-beads in an electronic smoking article.

### DETAILED DESCRIPTION

The present disclosure now will be described more fully hereinafter with reference to the accompanying drawings, in which some, but not all aspects of the disclosure are shown. Indeed, the disclosure may be embodied in many different forms and should not be construed as limited to the aspects set forth herein; rather, these aspects are provided so that this disclosure will be thorough and complete, will fully convey the scope of the disclosure to those skilled in the art, and will satisfy applicable legal requirements. Like numbers refer to like elements throughout. As used in this specification and the claims, the singular forms "a," "an," and "the" include plural referents unless the context clearly dictates otherwise.

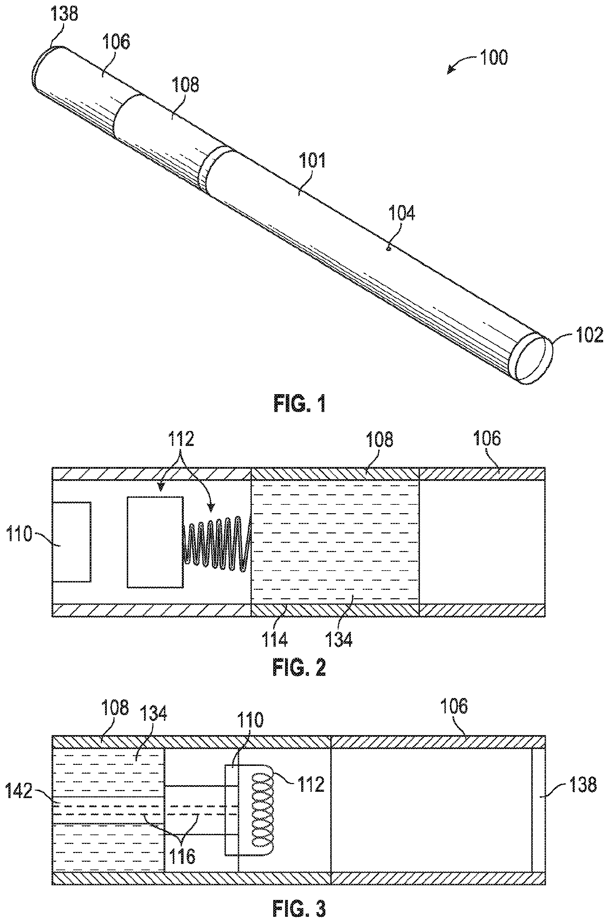

In accordance with an exemplary embodiment, as shown in FIG. 1, an electronic smoking article 100 includes a battery 104 a cylindrical reservoir 108 containing a liquid 134 and a micro-bead compartment 106 containing flavored micro-beads 120. The electronic cigarette has a light-emitting diode (LED) indicator end 102 and a mouth end 138. The LED indicator end 102 will simulate a traditional cigarettes lit end, indicating when the electronic cigarette is working. The mouth end 138 allows for the user to breathe into it, with one such embodiment allowing for the inhalation to draw in the liquid 134 and start the vaporization process.

Unlike regular cigarettes, the byproduct generated by the electronic smoking article is not a smoke, but rather an aerosol or a vapor resulting from the volatilization or vaporization of certain components incorporated therein. For example, inhalable substances can be substantially in the form of a vapor (i.e., a substance that is in the gas phase at a temperature lower than its critical point). Alternatively, inhalable substances can be in the form of an aerosol (i.e., a suspension of fine solid particles or liquid droplets in a gas). For purposes of simplicity, the term "vaporized liquid" as used herein is meant to include vapors, gases and aerosols of a form or type suitable for human inhalation, whether or not visible, and whether or not of a form that might be considered to be smoke-like.

The reservoir 108 contains the liquid 134 that is vaporized and moved through the micro-bead compartment 106. In some embodiments, the liquid includes substances such as, for example nicotine, tobacco-specific nitrosamines (TSNAs), aldehydes, metals, propylene glycol, glycerin, volatile organic compounds (VOCs), tobacco alkaloids, or any other suitable material that can be used to be vaporized. In particular embodiments, the liquid is a combination of nicotine, propylene glycol, and glycerin. The reservoir 108 is not limited to a particular size and can be opaque or transparent so that a user can view the liquid 134 therein.

The micro-bead compartment 106 contains an array of micro-beads 120 that have multiple flavor layers 136 that are extracted by the vaporized liquid as the vaporized liquid travels over the micro-bead 120. In some embodiments, the micro-bead 120 comprises a water soluble material suitable for dissolving in the vapor carrier in order to expose the volatile flavor compound. The water soluble material may comprise, for example, an inert salt compound and, more particular, a nicotine salt compound. The water soluble material may also comprise a food safe polymeric/gel substance that can react with the vapor. In any event, the water soluble material comprises an inert material so as to not affect the flavor. The flavor comprises a volatile aromatic compound that is "carried" by the vapor as the flavor layer dissolves. The micro-bead compartment 106 has ventilation on both ends, allowing aerosols to travel there through. The micro-bead compartment 106 can be opaque or transparent to view the current flavor layer 136 of the micro-beads 120. The micro-beads 120 in the micro-bead compartment 106 can have various arrangements, such as in an array around or between a medium that allows for aerosols and not solids, for example a mesh screen.

In some embodiments, the micro-bead compartment 106 is removable from the entire smoking article 100, allowing the micro-bead compartment 106 to be replaced by a new micro-bead compartment 106 having a different set of micro-beads 120 inside of it. These embodiments have the benefit of being easily swapped out for a new micro-bead compartment 106 that may contain different flavor profiles for use during a subsequent smoking experience. In some embodiments, the micro-bead compartment 106 is refillable with a new pack of micro-beads 120. These embodiments have the benefit of having a reusable electronic smoking article 100 as well as allow for a plethora of micro-beads 120 with different flavor profiles to be swapped in and out, while not having the issue found in the current art of using liquid flavoring that leaks, or spills when being refilled. In other embodiments, the micro-bead compartment 106 is permanently fixed to the smoking article 100 and other components. These embodiments have the benefit of limiting leakage, since a tighter seal in the entire smoking article 100 is possible because the liquid smoke reservoir 108 does not need to be refilled.

The overall design of the outer body of the micro-bead compartment 106 and the electronic smoking article 100 in general can vary, and the format and configuration of the outer body 101 can vary in size and shape. In particular embodiments, the outer body 101 of the electronic smoking article 100 has an elongated body resembling that of a traditional, combustible cigarette. In some embodiments the reservoir 108 and/or the micro-bead compartment 106 may comprise a disposable portion (e.g., a disposable cartridge) or a refillable portion (e.g., a refillable tank).

The electronic smoking article 100 can have various mechanisms for vaporizing the liquid 134 in the reservoir 108. One such mechanism, as shown in FIG. 2, includes a heating coil 112 in proximity to the reservoir 108 allowing the heating coil 112 to vaporize the liquid 134 in the reservoir 108. The heating coil 112 is controlled by a microprocessor 110 which regulates when the heating coil is activated and the duration and temperature of the heating coil 112. The microprocessor 110 may include an integrated circuit, a memory component, a sensor, or the like. The electronic components of the microprocessor 110 may be adapted to communicate with an external device by wired or wireless mechanisms. The microprocessor 110 is powered by a battery 104 shown in FIG. 1. The heating coil 112 vaporizes the liquid 134 in the reservoir 108. The vaporized liquid 118 is moved through the micro-bead compartment 106, and ultimately through the mouth end 138 and to the user.

The heating coil 112 shown in FIG. 2 can take a variety of configurations. In some embodiments, the heating coil 112 is in close proximity to or directly touching the reservoir 108 and orientated in a vertical, horizontal, or diagonal direction in relation to the reservoir 108. Other embodiments of the FIG. 2 include the heating coil 112 at different locations in relation to the reservoir, such as, for example, being located at either end of the reservoir 108. The heating coil 112 may have one single heating coil or may have multiple coils that are spaced out to smooth out the distribution of the heating of the reservoir 108.

As shown in FIG. 3, another mechanism for vaporizing the liquid 134 in the reservoir 108 involves a heating coil 112 in proximity to the reservoir 108 that allows the heating coil 112 to vaporize the liquid 134 in the reservoir 108. The heating coil 112 is controlled by a microprocessor 110 which regulates when the heating coil is activated and the duration and temperature of the heating coil 112. The microprocessor 110 may include an integrated circuit, a memory component, a sensor, or the like. The electronic components of the microprocessor 110 may be adapted to communicate with an external device by wired or wireless mechanisms. The microprocessor 110 is powered by the battery 104 shown in FIG. 1.

The liquid 134 is transported to the heating coil 112 via a transport mechanism 116. In some embodiments, the transport mechanism 116 utilizes gravity and capillary action to absorb and draw the liquid 134 from the reservoir 108 onto the heating coil 112 where it will be vaporized. In some embodiments, the heating coil 112 vaporizes the liquid 134 in the reservoir 108 and the vaporized liquid 118 is moved through the micro-bead compartment 106 ultimately to user through the mouth end 138.

The transport mechanism 116 in FIG. 3 can include any suitable material such as, for example, a wick or poly-fil. In some embodiments, a wick transport mechanism 116 comprises some combination of silica, organic cotton balls, cellucotton rayon fibers, stainless steel, fiberglass, and other materials with similar properties. In such embodiments, the wick absorbs the liquid 134 from the reservoir 108 and, when the user initiated action occurs, the liquid 134 is drawn through the wick to the heating coil 112. In some embodiments, the wick may be wrapped around the heating coil to improve vaporization of the liquid 134. In some embodiments, a poly-fil transport mechanism 116 can be used in substantially the same way as the wick transport mechanism 116. In particular embodiments, the poly-fil transport mechanism 116 utilizes several layers of gauze wrapped around the poly-fil transport mechanism 116 in order to saturate the poly-fil and increase the flow of liquid 134 to the heating coil 112. In other embodiments, the transport mechanism 116 can be in the middle of a tube 142 located within the center of the liquid. In those embodiments, the liquid 134 is drawn into the tube 142 through one or multiple holes at the bottom of the tube 142 within the reservoir 108.

In particular embodiments, a micro-bead compartment 106 is positioned within or coupled to the electronic smoking article 100 such that a vaporized liquid 118 or aerosol can travel over the micro-beads 120 so as to extract the current flavor in the exposed micro-bead 120 layer. As such, in various embodiments the micro-beads 120 in the micro-bead compartment 106 are situated in a way that allows for the vaporized liquid 118 to wash over all the micro-beads 120 present in the micro-bead compartment 106 so as to have an even, continuous current micro-bead flavor profile during the smoking experience. The shape and size of the micro-beads 120 can vary, for example being spherical, tubular, round, square, oval, and egg shaped. In particular embodiments, the micro-bead 120 is generally spherical in shape.

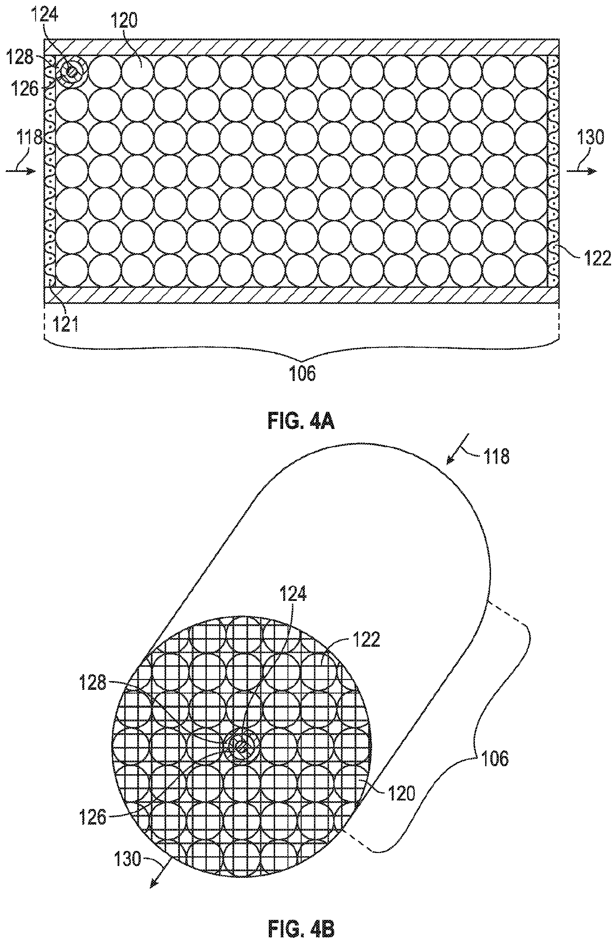

FIG. 4A shows an exemplary embodiment of the micro-bead compartment 106 as shown in FIG. 1, FIG. 2, and FIG. 3. The micro-bead compartment contains an upstream mesh screen 121 on the upstream end of the micro-bead compartment 106, a downstream mesh screen 122 on the downstream end of the micro-bead compartment 106, and micro-beads 120 packed in between the upstream mesh screen 121 and downstream mesh screen 122. The vaporized liquid 118 travels through the upstream end mesh screen 121 of the micro-bead compartment 106 and through the array of micro-beads 120. The vaporized liquid 118 flows through the micro-bead compartment 106 triggering each micro-bead 120 to dissolve, thereby extracting the current flavor layer 136 of the micro-bead 120. The extracted flavor combine with the vaporized liquid 118 to form a mixed aerosol 130 that travels through the downstream mesh screen 122 and to the mouth end 138. The micro-beads 120 are constructed so that the flavor is extracted in a consistent fashion as the vaporized liquid flows over it, providing for a strong, constant and changing flavor throughout the entire duration of the smoke.

In some embodiments, the upstream mesh screen 121 and the downstream mesh screen 122 comprise any suitable material that makes up an aerosol-porous membrane. For example, metal alloys, plastics, silicon, polymers, cotton, fabric, fiberglass, silicone, or any other suitable material can be used that is a permeable membrane for aerosols. In particular embodiments, the mesh screen comprises a plastic membrane with holes that allow for aerosols, such as the vaporized liquid 118 and mixed aerosol 130 to flow through it while trapping and keeping in place the micro-beads 120. In other embodiments, additional mesh screens are placed in between the upstream mesh screen 121 and downstream mesh screen 122 to improve filtration of non-aerosol material and provide additional structure to the micro-beads 120.

The micro-beads 120 can be situated in between the mesh screens with or without a support attachment. As seen in FIG. 4B, some embodiments, the micro-beads 120 are packed in tightly between the mesh screens, with no additional support mechanisms, wherein the interior of the micro-bead compartment 106 and the mesh screens provide support and keep the micro-beads 120 in place. Additional mesh screens are placed inside the micro-bead compartment 106 to mitigate micro-bead 120 movement as they dissolve, creating multiple
pack beds within the micro-bead compartment 106. In other embodiments, additional support structures are used to keep the micro-beads 120 in place between the two mesh screens, for example having a suitable material run through the center of each micro-bead 120, ensuring they remain stationary throughout the smoking experience. Shown in FIG. 4B, is one variation of the micro-bead 120 that has a first flavor layer 124 a second flavor layer 126 and a third flavor layer 128 each with a distinct flavor profile that is extracted by the vaporized liquid over the duration of the smoking experience. The micro-bead compartment 106 as a whole can be operatively coupled to an electronic smoking article.

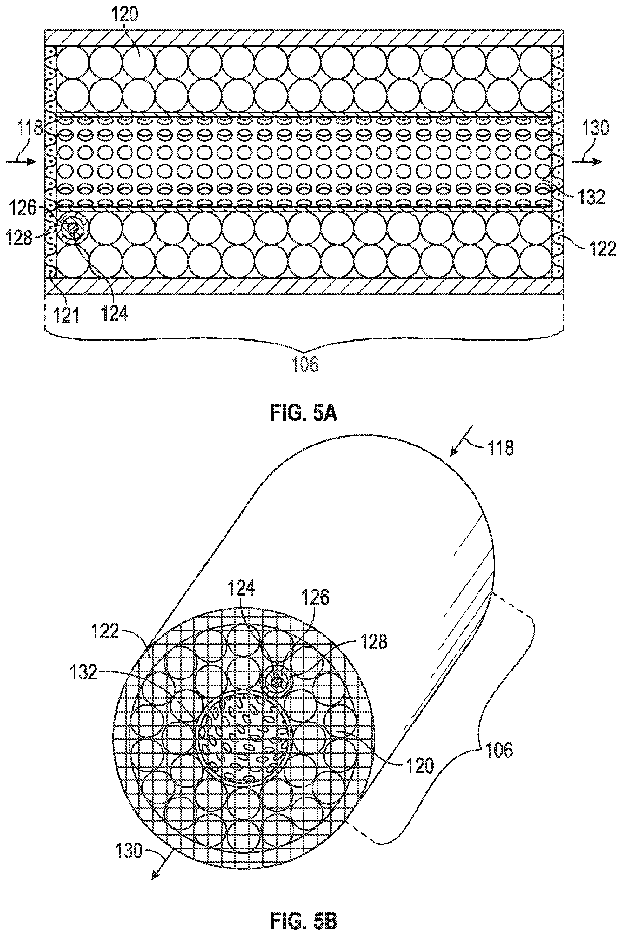

FIG. 5A shows and example the micro-bead compartment 106 containing a mesh cylinder 132 surrounded by an array of micro-beads 120. The vaporized liquid 118 travels through the upstream end of the mesh cylinder 132 of the micro-bead compartment 106 and through the holes in the mesh cylinder 132 to an array of micro-beads 120. The vaporized liquid 118 flows through the micro-bead compartment 106, triggering each micro-bead 120 to dissolve, extracting the current flavor layer 136 of the micro-bead 120 to mix with the vaporized liquid 118 to form a mixed aerosol 130. The mixed aerosol 130 travels back into the mesh cylinder 132 and travels through the downstream end of the micro-bead compartment 106 and to the mouth end 138. The micro-beads 120 are constructed so that the flavor is extracted in a consistent fashion as the vaporized liquid flows over it, providing for a strong, constant and changing flavor throughout the entire duration of the smoke. In some embodiments, the mesh cylinder is oriented in a way to provide optimal airflow through the cylinder, to provide a smooth and continuous flavor profile as the micro-beads 120 dissolve. In other embodiments, mesh screens are placed around the outside of the cylinder the micro-beads 120 to mitigate micro-bead 120 movement as they dissolve, creating multiple pack beds around the mesh cylinder 132 that allow for air to enter a compartment and leave without interrupting other compartments.

In some embodiments, the mesh cylinder 132 comprises any suitable material that makes up an aerosol-porous membrane. For example, metal alloys, plastics, polymers, cotton, fabric, fiberglass, silicone, or any other suitable material can be used that is a permeable membrane for aerosols. In particular embodiments, the mesh cylinder 132 comprises a cylindrical plastic membrane with a hollow core and holes around the surface of the cylinder which allow for aerosols, such as the vaporized liquid 118 and mixed aerosol 130 to flow through it while trapping and keeping in place the micro-beads 120. In other embodiments, additional mesh screens are placed inside the mesh cylinder 132 to improve filtration of non-aerosol material.

The micro-beads 120 can be situated around the outside of the mesh cylinder 132 with or without a support attachment. In some embodiments, the micro-beads 120 are packed around the outside of the mesh cylinder 132, with no additional support mechanisms, wherein the interior of the micro-bead compartment 106 and the exterior of the mesh cylinder provide support and keep the micro-beads 120 in place. In other embodiments, the micro-beads 120 are packed inside the interior of the cylinder, and the air flows from inside the mesh cylinder 132 out through the aerosol-porous exterior surface, and to the user. In some embodiments, additional support structures are used to keep the micro-beads 120 in place between the two mesh screens, for example having a suitable material run through the center of each micro-bead 120 ensuring they remain stationary throughout the smoking experience. Shown in FIG. 5B is one variation of the micro-bead 120 that has a first flavor layer 124, a second flavor layer 126 and a third flavor layer 128, each with a distinct flavor profile that is extracted by the vaporized liquid over the duration of the smoking experience. The micro-bead compartment 106 as a whole can be operatively coupled to an electronic smoking article.

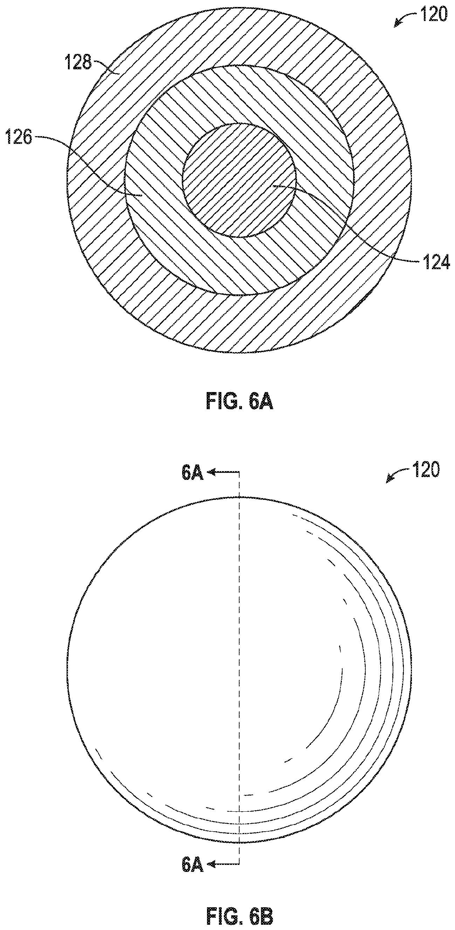

FIG. 6A is a cross-sectional view of a micro-bead including three flavor layers according to an embodiment. FIG. 6B shows the outer shell of the micro-bead of Figure 6A One micro-bead configuration comprises an innermost region or core of flavorant and a base aerosol precursor, and outer regions of flavor layers, where each layer is formed from a flavorant and a base aerosol precursor. In a particular embodiment, each micro-bead 120 is enclosed or sealed in such a way that the flavor layers are not accessible from the micro-bead 120 prior to desired conditions of use. In certain embodiments, the outer layer or of the micro-bead shell has sufficient resiliency and integrity to maintain encapsulation of the flavorants during normal conditions or storage and handling, but will allow for the flavor to be extracted from the micro-bead 120 as the vaporized liquid 118 flows over it, during conditions of normal use.

The micro-bead 120 depicted in FIGS. 6A and 6B may be formed by mixing a base aerosol precursor and a flavorant to generate a given flavor layer. The base aerosol precursor can include any suitable material such as, for example, gelatin, acacia (gum arabic), polyvinyl acetate, potassium alginate, carob bean gum, potassium citrate, carrageenan, potassium polymetaphosphate, citric acid, potassium tripolyphosphate, dextrin, polyvinyl alcohol, povidone, dimethylpolysiloxane, dimethyl silicone, refined paraffin wax, ethylcellulose, bleached shellac, modified food starch, sodium alginate, guar gum, sodium carboxymethylcellulose, hydroxypropyl cellulose, sodium citrate, hydroxypropylmethylcellulose, sodium ferrocyanide, sodium polyphosphates, locust bean gum, methylcellulose, sodium trimetaphosphate, methyl ethyl cellulose, sodium tripolyphosphate, microcrystalline wax, tannic acid, petroleum wax, terpene resin, tragacanth, polyethylene, xanthan gum, and polyethylene glycol or any other suitable base aerosol precursor which can be used to form the micro-bead 120. In some embodiments, the base aerosol precursor can comprise a water soluble material suitable for dissolving in the vapor carrier in order to expose the volatile flavor compound. The water soluble material may comprise, for example, an inert salt compound and, more particular, a nicotine salt compound. The water soluble material may also comprise a food safe polymeric/gel substance that can react with the vapor. In any event, the water soluble material comprises an inert material so as to not affect the flavor. The flavor comprises a volatile aromatic compound that is "carried" by the vapor as the flavor layer dissolves. In some embodiments, the flavorant can include, but is not limited to, generating flavor profiles to imitate the flavor of fruits, such as, banana, raspberry, cherry, lime, lemon, orange, strawberry, blueberry, coconut, etc., as well as imitate the flavor of traditional flavors, such as, chocolate, vanilla, mint, carrot, almond, either in single or combination with each other to create a flavor layer. Expanding further, the first flavor layer 124, the second flavor layer 126 and the third flavor layer 128 are formed from a mixture of base aerosol precursor and different flavorant for each layer, forming a three flavor layered micro-bead 120.

In some embodiments, the number of flavor layers can be in the range of 2-10, wherein each flavor layer has its own distinct flavor profile, different from any other flavor profile in a layer in the micro-bead 120. In particular embodiments, the micro-bead 120 has three flavor layers as shown in FIG. 6. In these particular embodiments, the last flavor to be extracted by the vaporized liquid, first flavor layer 124 constitutes the core of the micro-bead 120 and is created by injecting the mixture of a base aerosol precursor and flavorant into a mold that results in the creation of a micro-bead 120 core of approximately 0.03-0.05 mm in diameter. A second layer, second flavor layer 126 is added by coating the first flavor layer 124 sphere, with the second flavor layer 126 mixture , formed from a mixture of base aerosol precursor and flavorant. In a specific implementation, the second flavor layer 126 measures 0.3 mm from the edge of outer part of the first flavor layer 124 to the edge of the outer part of the second flavor layer 126. The second flavor layer 126 makes up a similar volume compared to the first flavor layer 124 to ensure equal flavor distribution during the duration of the smoke. A third layer 128 is added by coating the second flavor layer 126 with the third flavor layer 128, which is formed from a mixture of a base aerosol precursor and flavorant. In a specific implementation, the third flavor layer 128 measures 0.2 mm from the edge of the outer part of second flavor layer 126 to the edge of the outer part of the third flavor layer 128. The second flavor layer 126 and the third flavor layer 128 constitute a similar volume compared to the first flavor layer 124 to ensure equal flavor distribution during the length of the smoke time. A tumbling finishing method may be used to ensure uniform size and smoothness with each flavor layer of the micro-beads 120. For example, as each flavor layer is added and smoothed using the tumbling method, the resulting micro-beads 120 may be passed through a screen to ensure the correct or desired diameter has been reached for that specific layer.

In other embodiments, additional flavor layers 136 are coated onto the micro-bead 120 to generate a micro-bead 120 with, anywhere from, 2-10 layers of flavor. The additional flavor layers 136 are formed from a base aerosol precursor and flavorant In these other embodiments, adjustments to the size of each flavor layer 136 is formed so that the volume and shape of each individual flavor is substantially similar to any other flavor layer 136 to ensure equal flavor distribution during the length of the smoke time.

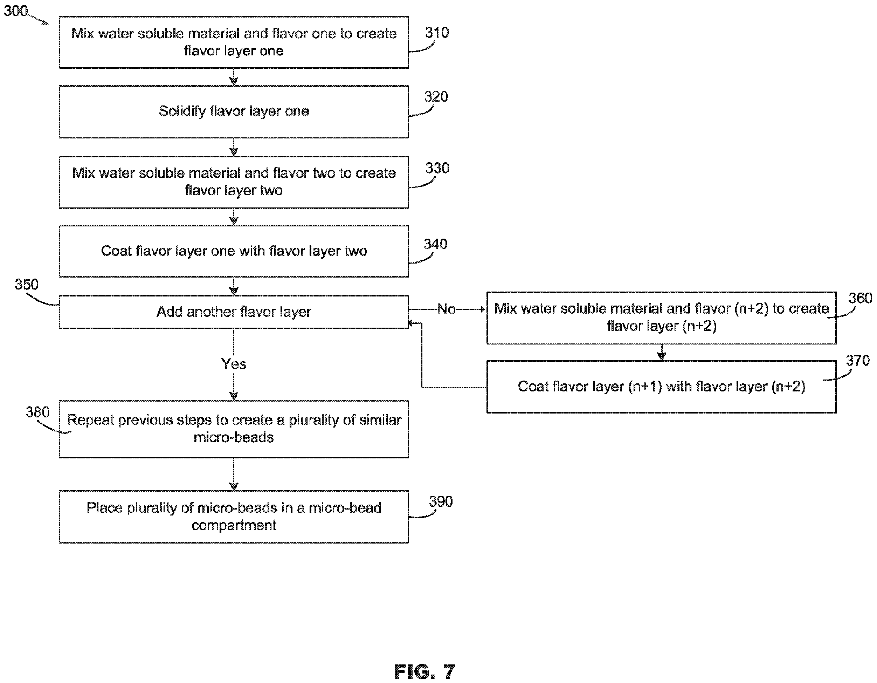

FIG. 7 is a schematic flow diagram of a method 300 for forming a micro-bead 120 according to an embodiment. The micro-bead 120 formed using the method 300 can be used for controlled flavor extraction in an electronic smoking article. The method 300 includes mixing a base aerosol precursor and a first flavorant to create a first flavor layer at 310. The base aerosol precursor can include any suitable material such as, for example, gelatin, acacia (gum arabic), polyvinyl acetate, potassium alginate, carob bean gum, potassium citrate, carrageenan, potassium polymetaphosphate, citric acid, potassium tripolyphosphate, dextrin, polyvinyl alcohol, povidone, dimethylpolysiloxane, dimethyl silicone, refined paraffin wax, ethylcellulose, bleached shellac, modified food starch, sodium alginate, guar gum, sodium carboxymethylcellulose, hydroxypropyl cellulose, sodium citrate, hydroxypropylmethylcellulose, sodium ferrocyanide, sodium polyphosphates, locust bean gum, methylcellulose, sodium trimetaphosphate, methyl ethyl cellulose, sodium tripolyphosphate, microcrystalline wax, tannic acid, petroleum wax, terpene resin, tragacanth, polyethylene, xanthan gum, and polyethylene glycol or any other suitable base aerosol precursor which can be used to form the micro-bead 120. In some embodiments, the base aerosol precursor can comprise a water soluble material suitable for dissolving in the vapor carrier in order to expose the volatile flavor compound. The water soluble material may comprise, for example, an inert salt compound and, more particular, a nicotine salt compound. The water soluble material may also comprise a food safe polymeric/gel substance that can react with the vapor. In any event, the water soluble material comprises an inert material so as to not affect the flavor. The flavor comprises a volatile aromatic compound that is "carried" by the vapor as the flavor layer dissolves. In some embodiments, the flavor one can include, but is not limited to, generating flavor profiles to imitate the flavor of fruits, such as, banana, raspberry, cherry, lime, lemon, orange, strawberry, blueberry, coconut, etc., as well as imitate the flavor of traditional flavors, such as, chocolate, vanilla, mint, carrot, almond, either in single or combination with each other to create the first flavor layer. The mixing is completed when both compounds have been uniformly mixed to create the desired saturated mixture.

The mixture of the base aerosol precursor and the first flavor layer is then solidified to form a shape at 320. The solidification includes taking the mixture of the base aerosol precursor and the first flavor layer and cooling it in a mold and utilizing a tumbling finishing method to ensure even shape and distribution of the micro-bead flavor layer. In some embodiments, the shape of the mixture of the base aerosol precursor and first flavor layer can be spherical, in order to ensure that the layer dissolves in an even, continuous fashion during the smoking experience. In some embodiments, the size of the first flavor layer is in the range of a diameter of 0.5 mm and 5 mm, for example about 1 mm, and having a volume in the range of 0.065 and 65.45 mm³, for example about 0.52 mm³. In some embodiments, the size or volume of the first flavor layer is identical to the other flavor layers to ensure that the layer dissolves in an even, continuous fashion during the smoking experience and lasts for the same duration as any previous flavor layer. For example, each flavor layer having a proportional volume that is equal to 1/t the total desired volume of the final micro-bead 120, where t is the total number of desired flavor layers.

A second flavor layer is formed by mixing the base aerosol precursor with the second flavor layer at 330. The base aerosol precursor can include any suitable material such as, for example, gelatin, acacia (gum arabic), polyvinyl acetate, potassium alginate, carob bean gum, potassium citrate, carrageenan, potassium polymetaphosphate, citric acid, potassium tripolyphosphate, dextrin, polyvinyl alcohol, povidone, dimethylpolysiloxane, dimethyl silicone, refined paraffin wax, ethylcellulose, bleached shellac, modified food starch, sodium alginate, guar gum, sodium carboxymethylcellulose, hydroxypropyl cellulose, sodium citrate, hydroxypropylmethylcellulose, sodium ferrocyanide, sodium polyphosphates, locust bean gum, methylcellulose, sodium trimetaphosphate, methyl ethyl cellulose, sodium tripolyphosphate, microcrystalline wax, tannic acid, petroleum wax, terpene resin, tragacanth, polyethylene, xanthan gum, and polyethylene glycol or any other suitable base aerosol precursor which can be used to form the micro-bead 120. Flavor two can include any suitable material such as, for example, a volatile aromatic compound that is "carried" by the vapor as the flavor layer dissolves. In some embodiments, flavor two can include, but is not limited to, generating flavor profiles to imitate the flavor of fruits, such as, banana, raspberry, cherry, lime, lemon, orange, strawberry, blueberry, coconut, etc., as well as imitate the flavor of traditional flavors, such as, chocolate, vanilla, mint, carrot, almond, either in single or combination with each other to create the second flavor layer. The mixing is completed when both compounds have been uniformly mixed to create the desired saturated mixture.

The mixture of the base aerosol precursor and the second flavor layer is then coated onto the existing first flavor layer shape at 340. In some embodiments, the first flavor layer is coated with a second layer, cooled and repeated until the desired size of the second layer is reached. In some embodiments, the shape of the mixture of the base aerosol precursor and second flavor layer can be similar to that of the first flavor layer shape, in order to ensure that the layer dissolves in an even, continuous fashion during the smoking experience. In some embodiments, the size of the second flavor layer is in the range of having a diameter from the interior layer, touching the previous flavor layer, and the exterior layer, the outermost part of the combined sphere, of 0.5 mm and 5 mm, for example about 1 mm. In some embodiments, the volume of the second flavor layer has a range of 0.065 and 65.45 mm³, for example about 0.52 mm³. In other embodiments, the second flavor layer has the exact same volume as the first flavor layer, to ensure that the layer dissolves in an even, continuous fashion during the smoking experience and lasts for the same duration as any previous and proceeding flavor layer.

The newly formed micro-bead 120 of the first flavor layer and the second flavor layer is either subjected to coating another layer of flavor or the micro-bead is completed at 350. In some embodiments, a micro-bead 120 of just two flavor layers is manufactured. In other embodiments, a micro-bead 120 consisting of three flavor layers is manufactured, with each flavor layer having a distinct flavor profile from the other flavor layers. In some embodiments, a micro-bead 120 with more than two flavor layers may have similar flavors in non-sequential layers, for example, a first flavor layer of cherry, a second flavor layer of banana and a third flavor layer of cherry again.

In other embodiments, another flavor layer is coated onto the existing flavor layers 350. The flavor layer is formed by mixing the base aerosol precursor with flavor layer (n+2) at 360, wherein n starts at 1 and goes up one increment after a flavor layer is added on, for example the next layer added onto the existing two flavor micro-bead 120 is 3 and n becomes 2 at the completion of the coating of the third flavor layer, the next layer coated will be flavor layer four and n becomes 3 at the completion of the coating of the fourth layer, etc. The base aerosol precursor for any additional flavor layer can include any suitable material such as, for example, a water soluble material suitable for dissolving in the vapor carrier in order to expose the volatile flavor compound. The water soluble material may comprise, for example, an inert salt compound and, more particular, a nicotine salt compound. The water soluble material may also comprise a food safe polymeric/gel substance that can react with the vapor. In any event, the water soluble material comprises an inert material so as to not affect the flavor. Flavor (n+2) can include any suitable material such as, for example, a volatile aromatic compound that is "carried" by the vapor as the flavor layer dissolves. In some embodiments, flavor (n+2) can include, but is not limited to, generating flavor profiles to imitate the flavor of fruits, such as, banana, raspberry, cherry, lime, lemon, orange, strawberry, blueberry, coconut, etc., as well as imitate the flavor of traditional flavors, such as, chocolate, vanilla, mint, carrot, almond, either in single or combination with each other to create the first flavor layer. The mixing is completed when both compounds have been uniformly mixed to create the desired saturated mixture.

The mixture of the base aerosol precursor and the current flavor layer (n+2) is coated onto the existing micro-bead shape at 370. In some embodiments, the existing micro-bead 120 is coated with a flavor layer (n+2), cooled and repeated until the desired size of the flavor layer (n+2) is reached. A tumbling finishing method may be used to ensure uniform size and smoothness with each flavor layer of the micro-beads, and the resulting micro-beads 120 may be passed through a screen to ensure the correct diameter has been reached. In some embodiments, the shape of the mixture of the base aerosol precursor and flavor layer (n+2) can be similar to that of the first flavor layer shape, in order to ensure that the layer dissolves in an even, continuous fashion during the smoking experience. In some embodiments, the size of flavor layer (n+2) is in the range of having a diameter from the interior layer, touching the previous flavor layer, and the exterior layer, the outermost part of the combined sphere, of 0.5 mm and 5 mm, for example about 1 mm. In some embodiments, the volume of the flavor layer (n+2) has a range of 0.065 and 65.45 mm³, for example about 0.52 mm³. In other embodiments, flavor layer (n+2) has the exact same volume as the first flavor layer 124, to ensure that ensure that the layer dissolves in an even, continuous fashion during the smoking experience and lasts for the same duration as any previous and proceeding flavor layer.

Any number of cycles of mixing an additional flavor layer with a base aerosol precursor and coating that mixture onto the existing micro-bead 120 can be performed to reach a desired number of flavor layers and a desired thickness of the micro-bead 380. In some embodiments, the number of cycles can be in the range of 2-10, wherein each flavor layer has its own distinct flavor profile, different from any other flavor profile in a layer in the micro-bead 120. In some embodiments, the number of cycles can be in the range of 2-10, with some flavor layers having the same flavor profile as another non-sequential layer, for example a four flavor layer micro-bead 120 may have similar flavors in the second and fourth, first and third, or first and fourth flavor layers. Once the desired number of flavor layers and combination of flavor profiles in a micro-bead 120 are manufactured, the micro-bead 120 is ready to be placed into an array 390 for use in an electronic smoking article.

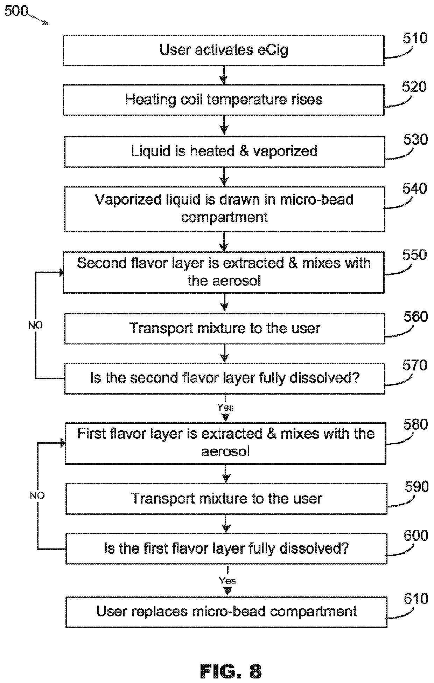

FIG. 8 is a schematic flow diagram of a method 500 for using a two flavored micro-bead 120 in an electronic smoking article according to an embodiment. The process of using the micro-bead 120 in method 500 allows for a vaporized liquid to dissolve the micro-bead 120 at a predetermined, predictable and continuous rate so that the user of the electronic smoking article gets an even and constant flavor extracted and change throughout the smoking experience, for example, the entire micro-bead could last for about 200 user puffs. The method 500 includes the user activating the electronic smoking article at 510. In some embodiments, the user can activate the smoking article by simply breathing into the mouth end of the electronic smoking article, or it can be activated by manually pressing a button on the electronic smoking article. Once the user activates the smoking article, the heating coil's temperature increases at 520, and the coil is supplied a voltage.

The liquid is then heated and vaporized at 530 by the heating coils. In some embodiments, the liquid is any suitable material, such as, for example nicotine, tobacco-specific nitrosamines (TSNAs), aldehydes, metals, propylene glycol, glycerin, volatile organic compounds (VOCs), tobacco alkaloids, or any other suitable material that can be used to be vaporized. In particular embodiments, the liquid is a combination of nicotine, propylene glycol and glycerin. In some embodiments the liquid is heated to reach a temperature in the range of 60-250 C, for example about 200 C. In some embodiments, a transport mechanism is used to transport the liquid to the heating coil, and the transport mechanism can comprise a variety of mediums, for example wick or poly-fil. In particular embodiments, the transport mechanism comprises poly-fil with layers of gauze wrapped around the poly-fil in order to saturate the poly-fil and increase the flow of liquid. In some embodiments the liquid is already near the hearing coil so little to no transportation is required to vaporize the liquid.

The vaporized liquid is then moved into a micro-bead compartment at 540 containing an array of micro-beads 120. In some embodiments, the user drawing in a breath at the mouth end of the electronic smoking article moves the vaporized liquid into and through a micro-bead compartment. The chemical composition and movement of the vaporized liquid, in combination with the composition of the micro-beads 120 in the micro-bead compartment cause the current flavor layer of the micro-beads to dissolve and extract the flavor from the micro-bead which mixes with the vaporized liquid. Any number of cycles of drawing the vaporized liquid through the micro-bead compartment can be performed to dissolve a layer.

At 550 the outermost layer of the micro-bead, the second flavor layer is extracted as the vaporized liquid moves through the micro-bead compartment. For example, the vaporized liquid is formulated to dissolve the exposed flavor layer of the micro-bead and the second flavor layer of the micro-bead includes a water soluble material suitable for dissolving in the vapor carrier in order to expose the volatile aromatic flavor compound. The extracted second flavorant and the vaporized liquid is delivered to the user 560. This extraction of the second flavorant and its delivery to the user continues until the second flavor layer is completely dissolved 570. At 580, the innermost layer of the micro-bead, the first flavor layer, is extracted as the vaporized liquid moves through the micro-bead compartment. For example, the vaporized liquid is formulated to dissolve the exposed flavor layer of the micro-bead and the first flavor layer of the micro-bead includes a water soluble material suitable for dissolving in the vapor carrier in order to expose the volatile aromatic flavor compound. The extracted first flavorant and the vaporized liquid is delivered to the user 590. This extraction of the first flavorant and its delivery to the user continues until the first flavor layer is completely dissolved 600. At 600 the user's smoking experience ends once the micro-beads have been completely dissolved, when the final flavor layer, the first flavor layer, is completely dissolved. At that point, the user may replace the micro-bead compartment at 610.

In some embodiments, each flavor of the micro-bead will last for a substantially similar number of user puffs or inhalations, so that the flavor stream is constant and changing at similar intervals to the next flavor layer in the micro-bead. Some embodiments allow for a used micro-bead compartment to be removed and replaced in the electronic smoking article with a new micro-bead compartment containing undissolved micro-beads. In other embodiments, the micro-bead compartment replacement also comes with an attached liquid reservoir replacement. In some embodiments, the user discards the entire electronic smoking article, and another electronic smoking article will be purchased with a new micro-bead compartment containing undissolved micro-beads.

As utilized herein, the terms "approximately," "about," "substantially," and similar terms are intended to have a broad meaning in harmony with the common and accepted usage by those of ordinary skill in the art to which the subject matter of this disclosure pertains. It should be understood by those of skill in the art who review this disclosure that these terms are intended to allow a description of certain features described and claimed without restricting the scope of these features to the precise numerical ranges provided. Accordingly, these terms should be interpreted as indicating that insubstantial or inconsequential modifications or alterations of the subject matter described and claimed are considered to be within the scope of the disclosure as recited in the appended claims.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

## Claims

1. An electronic smoking article accessory comprising:
a reservoir (108) configured to contain a liquid (134) to be vaporized;
a micro-bead compartment (106) including a region through which an aerosol may flow, the micro-bead compartment (106) including an upstream end connected to the reservoir (108) and a downstream end spaced from the upstream end;
a plurality of flavored micro-beads (120) positioned within the micro-bead compartment (106) between the upstream end and the downstream end, each of the plurality of micro-beads (120) comprising a plurality of layers (124, 126, 128), each of the plurality of layers (124, 126, 128) comprising a combination of a base aerosol precursor and a flavorant, each combination of the base aerosol precursor and the flavorant creating a distinct flavor for inhalation by a user when interacted with the aerosol flowing through the micro-bead compartment (106);
a first mesh screen (121) located on the upstream end of the micro-bead compartment (106);
a second mesh screen (122) located on the downstream end of the micro-bead compartment (106), the plurality of micro-beads (120) arranged in an array between the first mesh screen (121) and the second mesh screen (122); and
additional mesh screens placed inside the micro-bead compartment (106) and configured to mitigate movement of the plurality of micro-beads (120) as the plurality of micro-beads (120) dissolve.

2. The electronic smoking article accessory of claim 1, wherein the plurality of micro-beads (120) in the micro-bead compartment (106) are arranged around a mesh cylinder inside the micro-bead compartment (106).

3. The electronic smoking article accessory of claim 1, further comprising the liquid (134) to be vaporized, and wherein the liquid (134) to be vaporized comprises a mixture of propylene glycol, glycerin, and nicotine.

4. The electronic smoking article accessory of claim 1, wherein each of the plurality of layers (124, 126, 128) of each of the plurality of flavored micro-beads (120) lasts for a set number of user puffs, before the respective layer (124, 126, 128) fully dissolves.

5. The electronic smoking article accessory of claim 1, wherein each layer (124, 126, 128) of the plurality of layers (124, 126, 128) of each of the plurality of flavored micro-beads (120) is equal in volume to each other layer (124, 126, 128) of the plurality of layers (124, 126, 128).

6. A flavor compartment for use with an electronic smoking article comprising:
a housing element comprising a ventilated housing upstream end and a ventilated housing downstream end;
a first connection terminal on the ventilated housing upstream end portion configured to operably connect to an upstream end of the electronic smoking article and a second connection terminal on the ventilated housing downstream end portion configured to operably connect to a downstream end of the electronic smoking article;
the housing element containing a plurality of flavored micro-beads (120) positioned within the compartment between the ventilated housing upstream end and the ventilated housing downstream end, each of the plurality of micro-beads (120) comprising a plurality of layers (124, 126, 128), each of the plurality of layers (124, 126, 128) comprising a combination of a base aerosol precursor and a flavorant, each combination of the base aerosol precursor and the flavorant interacting with an aerosol flowing through the compartment to create a distinct flavor for inhalation by a user;
a first mesh screen (121) located on the upstream end of the housing element;
a second mesh screen (122) located on the downstream end of the housing element, the plurality of micro-beads (120) arranged in an array between the first mesh screen (121) and the second mesh screen (122); and additional mesh screens placed inside the housing element and configured to mitigate movement of the plurality of micro-beads (120) as the plurality of micro-beads (120) dissolve.

7. The compartment of claim 6, wherein the plurality of micro-beads (120) in the micro-bead compartment are arranged around a mesh cylinder (132) inside the housing element.

8. The compartment of claim 6, wherein each flavor layer (124, 126, 128) of the micro-bead (120) lasts for a set number of user puffs, before the flavor layer (124, 126, 128) fully dissolves.

9. The compartment of claim 6, wherein each individual layer (124, 126, 128) in the plurality of layers (124, 126, 128) in the micro-bead (120) is equal in volume to each other layer (124, 126, 128) of the plurality of layers (124, 126, 128).

10. A method for adding a plurality of flavors to an aerosol in an electronic smoking article comprising:
vaporizing a liquid (134);
passing the vaporized liquid (118) into a micro-bead compartment (106), the micro-bead compartment (106) comprising:
a first mesh screen (121) located on the upstream end of the micro-bead compartment (106);
a second mesh screen (122) located on the downstream end of the micro bead compartment (106), the plurality of micro-beads (120) arranged in an array between the first mesh screen (121) and the second mesh screen (122); and
additional mesh screens placed inside the micro-bead compartment (106);
extracting a first flavorant from a first flavor layer (124) of a plurality of micro-beads (120) in the micro-bead compartment (106);
mixing the extracted first flavorant and the vaporized liquid (118) into a first aerosol for subsequent inhalation by a user;
after exhausting the first flavorant, extracting a second flavorant from a second flavor layer (126) of the plurality of micro-beads (120) in the micro-bead compartment (106); and
mixing the extracted second flavorant and the vaporized liquid (118) into a second aerosol for subsequent inhalation by a user, wherein the additional mesh screens are configured to mitigate movement of the plurality of micro-beads (120) as the plurality of micro-beads (120) dissolve.

11. The method of claim 10, further comprising:
after exhausting the second flavorant, extracting a third flavorant from a third flavor layer (128) of the plurality of micro-beads (120) in the micro-bead compartment (106); and
mixing the extracted third flavorant and the vaporized liquid (118) into a third aerosol for subsequent inhalation by a user,
in particular further comprising:
after exhausting the third flavorant, extracting a fourth flavorant from a fourth flavor layer of the plurality of micro-beads (120) in the micro-bead compartment (106); and
mixing the extracted fourth flavorant and the vaporized liquid (118) into a fourth aerosol for subsequent inhalation by a user.

12. The method of claim 11, further comprising:
after exhausting the fourth flavorant, extracting a fifth flavorant from a fifth flavor layer of the plurality of micro-beads (120) in the micro-bead compartment (106); and
mixing the extracted fifth flavorant and the vaporized liquid (118) into a fifth aerosol for subsequent inhalation by a user.

## Patentansprüche

1. Ein Zubehör für einen elektronischen Rauchartikel, umfassend:
ein Reservoir (108), welches dazu ausgebildet ist, eine zu verdampfende Flüssigkeit (134) aufzunehmen;
ein Microbead-Abteil (106), welches einen Bereich umfasst, welcher von einem Aerosol durchströmbar ist, wobei das Microbead-Abteil (106) ein aufstromseitiges Ende, welches mit dem Reservoir (108) verbunden ist, und ein abstromseitiges Ende, welches von dem aufstromseitigen Ende beabstandet ist, umfasst;
eine Mehrzahl von geflavourten Microbeads (120), welche innerhalb des Microbead-Abteils (106) zwischen dem aufstromseitigen Ende und dem abstromseitigen Ende positioniert sind, wobei jedes der Mehrzahl von Microbeads (120) eine Mehrzahl von Lagen (124, 126, 128) umfasst, wobei jede der Mehrzahl von Lagen (124, 126, 128) eine Kombination von einem Basis-Aerosol-Precursor und einem Flavour-Agens umfasst, wobei jede Kombination von dem Basis-Aerosol-Precursor und dem Flavour-Agens einen unterschiedlichen Flavour zur Inhalation durch einen Nutzer erzeugt, wenn sie mit dem das Microbead-Abteil (106) durchströmenden Aerosol in Wechselwirkung tritt;
ein erstes Maschensieb (121), welches an dem aufstromseitigen Ende des Microbead-Abteils (106) angeordnet ist;
ein zweites Maschensieb (122), welches an dem abstromseitigen Ende des Microbead-Abteils (106) angeordnet ist, wobei die Mehrzahl von Microbeads (120) in einer Anordnung zwischen dem ersten Maschensieb (121) und dem zweiten Maschensieb (122) angeordnet sind; und zusätzliche Maschensiebe, welche im Inneren des Microbead-Abteils (106) angeordnet sind und dazu ausgebildet sind, eine Bewegung der Mehrzahl von Microbeads (120) abzumildern, wenn sich die Mehrzahl von Microbeads (120) auflösen.

2. Das Zubehör für einen elektronischen Rauchartikel nach Anspruch 1, wobei die Mehrzahl von Microbeads (120) in dem Microbead-Abteil (106) um einen Maschenzylinder im Inneren des Microbead-Abteils (106) angeordnet sind.

3. Das Zubehör für einen elektronischen Rauchartikel nach Anspruch 1, welches ferner die zu verdampfende Flüssigkeit (134) umfasst und wobei die zu verdampfende Flüssigkeit (134) eine Mischung von Propylenglycol, Glycerin und Nicotin umfasst.

4. Das Zubehör für einen elektronischen Rauchartikel nach Anspruch 1, wobei jede der Mehrzahl von Lagen (124, 126, 128) von jedem der Mehrzahl von geflavourten Microbeads (120) für eine gesetzte Anzahl von Zügen des Nutzers hält, bevor sich die jeweilige Lage (124, 126, 128) vollständig auflöst.

5. Das Zubehör für einen elektronischen Rauchartikel nach Anspruch 1, wobei jede Lage (124, 126, 128) der Mehrzahl von Lagen (124, 126, 128) von jedem der Mehrzahl von geflavourten Microbeads (120) das gleiche Volumen wie jede andere Lage (124, 126, 128) der Mehrzahl von Lagen (124, 126, 128) aufweist.

6. Ein Flavour-Abteil zur Verwendung mit einem elektronischen Rauchartikel, umfassend:
ein Gehäuseelement, umfassend ein ventiliertes aufstromseitiges Gehäuseende und ein ventiliertes abstromseitiges Gehäuseende;
einen ersten Verbindungsanschluss an dem ventilierten aufstromseitigen Gehäuseendbereich, welcher dazu ausgebildet ist, mit einem aufstromseitigen Ende des elektronischen Rauchartikels wirkverbunden zu werden, und einen zweiten Verbindungsanschluss an dem ventilierten abstromseitigen Gehäuseendbereich, welcher dazu ausgebildet ist, mit einem abstromseitigen Ende des elektronischen Rauchartikels wirkverbunden zu werden;
wobei das Gehäuseelement eine Mehrzahl von geflavourten Microbeads (120) enthält, welche innerhalb des Abteils zwischen dem ventilierten aufstromseitigen Gehäuseende und dem ventilierten abstromseitigen Gehäuseende positioniert sind, wobei jedes der Mehrzahl von Microbeads (120) eine Mehrzahl von Lagen (124, 126, 128) umfasst, wobei jede der Mehrzahl von Lagen (124, 126, 128) eine Kombination von einem Basis-Aerosol-Precursor und einem Flavour-Agens umfasst, wobei jede Kombination von dem Basis-Aerosol-Precursor und dem Flavour-Agens mit einem das Abteil durchströmenden Aerosol in Wechselwirkung tritt, um einen unterschiedlichen Flavour zur Inhalation durch einen Nutzer zu erzeugen;
ein erstes Maschensieb (121), welches an dem aufstromseitigen Ende des Gehäuseelements angeordnet ist;
ein zweites Maschensieb (122), welches an dem abstromseitigen Ende des Gehäuseelements angeordnet ist, wobei die Mehrzahl von Microbeads (120) in einer Anordnung zwischen dem ersten Maschensieb (121) und dem zweiten Maschensieb (122) angeordnet sind; und
zusätzliche Maschensiebe, welche im Inneren des Gehäuseelements angeordnet sind und dazu ausgebildet sind, eine Bewegung der Mehrzahl von Microbeads (120) abzumildern, wenn sich die Mehrzahl von Microbeads (120) auflösen.

7. Das Abteil nach Anspruch 6, wobei die Mehrzahl von Microbeads (120) in dem Microbead-Abteil um einen Maschenzylinder (132) im Inneren des Gehäuseelements angeordnet sind.

8. Das Abteil nach Anspruch 6, wobei jede Flavour-Lage (124, 126, 128) des Microbead (120) für eine gesetzte Anzahl von Zügen des Nutzers hält, bevor sich die Flavour-Lage (124, 126, 128) vollständig auflöst.

9. Das Abteil nach Anspruch 6, wobei jede individuelle Lage (124, 126, 128) in der Mehrzahl von Lagen (124, 126, 128) in dem Microbead (120) das gleiche Volumen wie jede andere Lage (124, 126, 128) der Mehrzahl von Lagen (124, 126, 128) aufweist.

10. Ein Verfahren zum Hinzufügen einer Mehrzahl von Flavours zu einem Aerosol in einem elektronischen Rauchartikel, umfassend:
Verdampfen einer Flüssigkeit (134);
Einleiten der verdampften Flüssigkeit (118) in ein Microbead-Abteil (106), wobei das Microbead-Abteil (106) umfasst:
ein erstes Maschensieb (121), welches an dem aufstromseitigen Ende des Microbead-Abteils (106) angeordnet ist;
ein zweites Maschensieb (122), welches an dem abstromseitigen Ende des Microbead-Abteils (106) angeordnet ist, wobei die Mehrzahl von Microbeads (120) in einer Anordnung zwischen dem ersten Maschensieb (121) und dem zweiten Maschensieb (122) angeordnet sind; und
zusätzliche Maschensiebe, welche im Inneren des Microbead-Abteils (106) angeordnet sind;
Extrahieren eines ersten Flavour-Agens aus einer ersten Flavour-Lage (124) von einer Mehrzahl von Microbeads (120) in dem Microbead-Abteil (106);
Mischen des extrahierten ersten Flavour-Agens und der verdampften Flüssigkeit (118) zu einem ersten Aerosol zur nachfolgenden Inhalation durch einen Nutzer;
Extrahieren - wenn das erste Flavour-Agens erschöpft ist - eines zweiten Flavour-Agens aus einer zweiten Flavour-Lage (126) von der Mehrzahl von Microbeads (120) in dem Microbead-Abteil (106); und
Mischen des extrahierten zweiten Flavour-Agens und der verdampften Flüssigkeit (118) zu einem zweiten Aerosol zur nachfolgenden Inhalation durch einen Nutzer, wobei die zusätzlichen Maschensiebe dazu ausgebildet sind, eine Bewegung der Mehrzahl von Microbeads (120) abzumildern, wenn sich die Mehrzahl von Microbeads (120) auflösen.

11. Das Verfahren nach Anspruch 10, ferner umfassend:
Extrahieren - wenn das zweite Flavour-Agens erschöpft ist - eines dritten Flavour-Agens aus einer dritten Flavour-Lage (128) von der Mehrzahl von Microbeads (120) in dem Microbead-Abteil (106); und
Mischen des extrahierten dritten Flavour-Agens und der verdampften Flüssigkeit (118) zu einem dritten Aerosol zur nachfolgenden Inhalation durch einen Nutzer,
insbesondere ferner umfassend:
Extrahieren - wenn das dritte Flavour-Agens erschöpft ist - eines vierten Flavour-Agens aus einer vierten Flavour-Lage von der Mehrzahl von Microbeads (120) in dem Microbead-Abteil (106); und
Mischen des extrahierten vierten Flavour-Agens und der verdampften Flüssigkeit (118) zu einem vierten Aerosol zur nachfolgenden Inhalation durch einen Nutzer.

12. Das Verfahren nach Anspruch 11, ferner umfassend:
Extrahieren - wenn das vierte Flavour-Agens erschöpft ist - eines fünften Flavour-Agens aus einer fünften Flavour-Lage von der Mehrzahl von Microbeads (120) in dem Microbead-Abteil (106); und
Mischen des extrahierten fünften Flavour-Agens und der verdampften Flüssigkeit (118) zu einem fünften Aerosol zur nachfolgenden Inhalation durch einen Nutzer.

## Revendications

1. Accessoire pour article à fumer électronique comprenant :
un réservoir (108) configuré pour contenir un liquide (134) devant être vaporisé ;
un compartiment à microbilles (106) comportant une région à travers laquelle un aérosol peut s'écouler, le compartiment à microbilles (106) comportant une extrémité amont reliée au réservoir (108) et une extrémité aval espacée de l'extrémité amont ;
une pluralité de microbilles (120) aromatisées positionnées dans le compartiment à microbilles (106) entre l'extrémité amont et l'extrémité aval, chacune de la pluralité de microbilles (120) comprenant une pluralité de couches (124, 126, 128), chacune de la pluralité de couches (124, 126, 128) comprenant une combinaison d'un précurseur d'aérosol de base et d'une essence, chaque combinaison du précurseur d'aérosol de base et de l'essence créant un arôme distinct pour une inhalation par un utilisateur lors d'une interaction avec l'aérosol s'écoulant à travers le compartiment à microbilles (106) ;
un premier grillage maillé (121) situé sur l'extrémité amont du compartiment à microbilles (106) ;
un second grillage maillé (122) situé sur l'extrémité aval du compartiment à microbilles (106), la pluralité de microbilles (120) étant agencées en un groupement entre le premier grillage maillé (121) et le second grillage maillé (122) ; et
des grillages maillés supplémentaires placés à l'intérieur du compartiment à microbilles (106) et configurés pour atténuer un déplacement de la pluralité de microbilles (120) tandis que la pluralité de microbilles (120) se dissolvent.

2. Accessoire pour article à fumer électronique selon la revendication 1, dans lequel la pluralité de microbilles (120) dans le compartiment à microbilles (106) sont agencées autour d'un cylindre maillé à l'intérieur du compartiment à microbilles (106).

3. Accessoire pour article à fumer électronique selon la revendication 1, comprenant en outre le liquide (134) devant être vaporisé, et dans lequel le liquide (134) devant être vaporisé comprend un mélange de propylène glycol, glycérine et nicotine.

4. Accessoire pour article à fumer électronique selon la revendication 1, dans lequel chacune de la pluralité de couches (124, 126, 128) de chacune de la pluralité de microbilles (120) aromatisées dure pendant un nombre défini de bouffées d'utilisateur, avant que la couche (124, 126, 128) respective ne se dissolve complètement.

5. Accessoire pour article à fumer électronique selon la revendication 1, dans lequel chaque couche (124, 126, 128) de la pluralité de couches (124, 126, 128) de chacune de la pluralité de microbilles (120) aromatisées est égale en volume à chaque autre couche (124, 126, 128) de la pluralité de couches (124, 126, 128).

6. Compartiment à arôme pour une utilisation avec un article à fumer électronique comprenant :
un élément boîtier comprenant une extrémité amont de boîtier ventilée et une extrémité aval de boîtier ventilée ;
une première borne de liaison sur la partie extrémité amont de boîtier ventilée configurée pour être reliée fonctionnellement à une extrémité amont de l'article à fumer électronique et une seconde borne de liaison sur la partie extrémité aval de boîtier ventilée configurée pour être reliée fonctionnellement à une extrémité aval de l'article à fumer électronique ;
l'élément boîtier contenant une pluralité de microbilles (120) aromatisées positionnées dans le compartiment entre l'extrémité amont de boîtier ventilée et l'extrémité aval de boîtier ventilée, chacune de la pluralité de microbilles (120) comprenant une pluralité de couches (124, 126, 128), chacune de la pluralité de couches (124, 126, 128) comprenant une combinaison d'un précurseur d'aérosol de base et d'une essence, chaque combinaison du précurseur d'aérosol de base et de l'essence interagissant avec un aérosol s'écoulant à travers le compartiment pour créer un arôme distinct pour une inhalation par un utilisateur ;
un premier grillage maillé (121) situé sur l'extrémité amont de l'élément boîtier ;
un second grillage maillé (122) situé sur l'extrémité aval de l'élément boîtier, la pluralité de microbilles (120) étant agencées en un groupement entre le premier grillage maillé (121) et le second grillage maillé (122) ; et des grillages maillés supplémentaires placés à l'intérieur de l'élément boîtier et configurés pour atténuer un déplacement de la pluralité de microbilles (120) tandis que la pluralité de microbilles (120) se dissolvent.

7. Compartiment selon la revendication 6, dans lequel la pluralité de microbilles (120) dans le compartiment à microbilles sont agencées autour d'un cylindre maillé (132) à l'intérieur de l'élément boîtier.

8. Compartiment selon la revendication 6, dans lequel chaque couche (124, 126, 128) d'arôme de la microbille (120) dure pendant un nombre défini de bouffées d'utilisateur, avant que la couche (124, 126, 128) d'arôme ne se dissolve complètement.

9. Compartiment selon la revendication 6, dans lequel chaque couche (124, 126, 128) individuelle dans la pluralité de couches (124, 126, 128) dans la microbille (120) est égale en volume à chaque autre couche (124, 126, 128) de la pluralité de couches (124, 126, 128).

10. Méthode pour ajouter une pluralité d'arômes à un aérosol dans un article à fumer électronique comprenant :
la vaporisation d'un liquide (134) ;
le passage du liquide vaporisé (118) dans un compartiment à microbilles (106), le compartiment à microbilles (106) comprenant :
un premier grillage maillé (121) situé sur l'extrémité amont du compartiment à microbilles (106) ;
un second grillage maillé (122) situé sur l'extrémité aval du compartiment à microbilles (106), la pluralité de microbilles (120) étant agencées en un groupement entre le premier grillage maillé (121) et le second grillage maillé (122) ; et
des grillages maillés supplémentaires placés à l'intérieur du compartiment à microbilles (106) ;
l'extraction d'une première essence d'une première couche (124) d'arôme d'une pluralité de microbilles (120) dans le compartiment à microbilles (106) ;
le mélange de la première essence extraite et du liquide vaporisé (118) dans un premier aérosol pour une inhalation ultérieure par un utilisateur ;
après l'épuisement de la première essence, l'extraction d'une deuxième essence d'une deuxième couche (126) d'arôme de la pluralité de microbilles (120) dans le compartiment à microbilles (106) ; et
le mélange de la deuxième essence extraite et du liquide vaporisé (118) dans un deuxième aérosol pour une inhalation ultérieure par un utilisateur, dans laquelle les grillages maillés supplémentaires sont configurés pour atténuer un déplacement de la pluralité de microbilles (120) tandis que la pluralité de microbilles (120) se dissolvent.

11. Méthode selon la revendication 10, comprenant en outre :
après l'épuisement de la deuxième essence, l'extraction d'une troisième essence d'une troisième couche (128) d'arôme de la pluralité de microbilles (120) dans le compartiment à microbilles (106) ; et
le mélange de la troisième essence extraite et du liquide vaporisé (118) dans un troisième aérosol pour une inhalation ultérieure par un utilisateur,
en particulier comprenant en outre :
après l'épuisement de la troisième essence, l'extraction d'une quatrième essence d'une quatrième couche d'arôme de la pluralité de microbilles (120) dans le compartiment à microbilles (106) ; et
le mélange de la quatrième essence extraite et du liquide vaporisé (118) dans un quatrième aérosol pour une inhalation ultérieure par un utilisateur.

12. Méthode selon la revendication 11, comprenant en outre :
après l'épuisement de la quatrième essence, l'extraction d'une cinquième essence d'une cinquième couche d'arôme de la pluralité de microbilles (120) dans le compartiment à microbilles (106) ; et
le mélange de la cinquième essence extraite et du liquide vaporisé (118) dans un cinquième aérosol pour une inhalation ultérieure par un utilisateur.
